# EUROPÄISCHE PATENTANMELDUNG

(11) **EP 4 064 484 A1**
(43) Veröffentlichungstag der Anmeldung: **28.09.2022**
(21) Anmeldenummer: 21165063.5
(22) Anmeldetag: 25.03.2021
(51) Int. Cl.: H02G 3/34, H02G 3/08, H02G 3/10, H02G 3/04, F21V 21/03, F21V 21/04, F21V 21/112, H01R 33/76, H01R 33/94

(54) **AUFPUTZ-ELEKTROINSTALLATION UND AUFPUTZBEFESTIGUNGSSYSTEM FÜR EIN ELEKTROBAUTEIL**

(71) Anmelder: HSB Weibel AG, 9435 Heerbrugg SG (CH)
(72) Erfinder: STEIGER, Thomas, CH-9435 Heerbrugg (CH)
(74) Vertreter: Kaminski Harmann

(57) **Zusammenfassung**

Die Erfindung betrifft eine Aufputz-Elektroinstallation aufweisend ein Tragstück zur Befestigung an einer verputzten oder unverputzten Wand- oder Deckenoberfläche mittels einer Schraube, ein Raststück zum Verbinden mit dem Tragstück und mindestens ein Elektrobauteil ausgebildet als Schalter, Steckdose, Feuermelder, Bewegungsmelder oder Lampe. Das Tragstück weist auf 1) eine Auflagefläche zum Aufliegen eines Schraubenkopfes der Schraube, wobei die Auflagefläche im Tragstück angeordnet ist und in eine im Vergleich zu einer ersten Stirnseite des Tragstücks entgegengesetzte Richtung orientiert ist, 2) ein parallel zu einer Längsachse des Tragstücks verlaufendes erstes Zahnprofil, und 3) ein senkrecht zur Längsachse verlaufendes zweites Zahnprofil, welches insbesondere umfänglich um die Auflagefläche verläuft. Das Raststück weist auf 1) ein drittes Zahnprofil, als komplementär zum ersten Zahnprofil, ausgebildet, sodass bei Aufsatz des Raststücks auf das Tragstück durch Einrasten das erste Zahnprofil mit dem dritten Zahnprofil eine formschlüssige Verbindung hinsichtlich einer Richtung parallel zur Längsachse eingeht, und 2) ein viertes Zahnprofil, als komplementär zum zweiten Zahnprofil ausgebildet, sodass bei Aufsatz des Raststücks auf das Tragstück durch Einrasten das zweite Zahnprofil mit dem vierten Zahnprofil eine formschlüssige Verbindung hinsichtlich einer Drehrichtung um die Längsachse eingeht. Das Elektrobauteil ist an dem Raststück angeordnet oder weist das Raststück, insbesondere vormontiert als integralen Bestandteil, auf. Das erste und dritte Zahnprofil sind zusammen so beschaffen, dass mehrere mögliche Einrastpositionen zwischen dem ersten und dritten Zahlprofil bereitgestellt werden, insbesondere wobei das erste und/oder das dritte Zahnprofil in Längsrichtung mindestens zwei Zähne aufweist.

## Beschreibung

### GEBIET DER ERFINDUNG

Die vorliegende Erfindung betrifft eine Aufputz-Elektroinstallation und ein Aufputz-Befestigungssystem.

### HINTERGRUND DER ERFINDUNG

Aufputz-Elektroinstallation und Aufputz-Befestigungssysteme sind aus dem Stand der Technik bekannt. Übliche bekannte Systeme nutzen einen rechteckigen Befestigungsbügel (der eine Befestigungsplatte aufweist), der mit vier Schrauben an einer Wand- oder Deckenoberfläche befestigt wird. Hierzu sind vier Bohrungen nötig, die üblicherweise so positioniert werden, dass der Befestigungsbügel in seinen vier Ecken mittels Schrauben mit der Wand oder Deckenoberfläche verbunden ist. Am so fest angebrachten Befestigungsbügel wird dann ein Elektrobauteil, z.B. eine Steckdose oder ein Schalter, montiert.

Das am Befestigungsbügel montierte Elektrobauteil wird mit Stromkabeln mit seiner elektrischen Umwelt verbunden. Ein das Elektrobauteil montierender Handwerker nutzt üblicherweise ein Messer, um eine Sollbruchstelle im Gehäuse des Elektrobauteils zu öffnen. Durch die so geöffnete Sollbruchstelle kann dann ein Stromkabel in das Innere des Elektrobauteils geführt werden. In einem Bereich um die Sollbruchstelle herum ist das Stromkabel bei Aufputz-Elektroinstallationen nach dem Stand der Technik üblicherweise nicht geschützt, d.h. es kann leicht mechanisch beschädigt werden. Ein Handwerker ist zwar im Allgemeinen bestrebt, ein das Stromkabel umgebendes schützendes Rohr bis zum Elektrobauteil zu verlegen. Üblicherweise ist dies aber nicht vollständig möglich.

### AUFGABE DER ERFINDUNG

Es ist eine Aufgabe der Erfindung, eine Aufputz-Elektroinstallation bereitzustellen, die vereinfacht an einer verputzten oder unverputzten Wand- oder Deckenoberfläche befestigt werden kann, insbesondere mit einer Bohrung, und die insbesondere auch einfach an einer unebenen Wand- oder Deckenoberfläche befestigt werden kann.

Eine weitere Aufgabe der Erfindung ist es, ein Aufputz-Befestigungssystem bereitzustellen, mit dessen Hilfe ein Elektrobauteil vereinfacht an einer verputzten oder unverputzten Wand- oder Deckenoberfläche befestigt werden kann, insbesondere mit einer Bohrung, und mit dessen Hilfe ein Elektrobauteil insbesondere auch einfach an einer unebenen Wand- oder Deckenoberfläche befestigt werden kann.

Eine weitere Aufgabe der Erfindung ist es, ein Aufputz-Befestigungssystem bereitzustellen, das zumindest teilweise vormontiert ist und das in wenigen Arbeitsschritten am Montageort installiert werden kann.

### ZUSAMMENFASSUNG DER ERFINDUNG

Die vorliegende Erfindung betrifft eine Aufputz-Elektroinstallation aufweisend ein Tragstück zur Befestigung an einer verputzten oder unverputzten Wand- oder Deckenoberfläche mittels einer Schraube, ein Raststück zum Verbinden mit dem Tragstück und mindestens ein Elektrobauteil ausgebildet als Schalter, Steckdose, Feuermelder, Bewegungsmelder oder Lampe. Das Tragstück weist auf 1) eine Auflagefläche zum Aufliegen eines Schraubenkopfes der Schraube, wobei die Auflagefläche im Tragstück angeordnet ist und in eine im Vergleich zu einer ersten Stirnseite des Tragstücks entgegengesetzte Richtung orientiert ist, 2) ein parallel zu einer Längsachse des Tragstücks verlaufendes erstes Zahnprofil, und 3) ein senkrecht zur Längsachse verlaufendes zweites Zahnprofil, welches insbesondere umfänglich um die Auflagefläche verläuft. Das Raststück weist auf 1) ein drittes Zahnprofil, als komplementär zum ersten Zahnprofil, ausgebildet, sodass bei Aufsatz des Raststücks auf das Tragstück durch Einrasten das erste Zahnprofil mit dem dritten Zahnprofil eine formschlüssige Verbindung hinsichtlich einer Richtung parallel zur Längsachse eingeht, und 2) ein viertes Zahnprofil, als komplementär zum zweiten Zahnprofil ausgebildet, sodass bei Aufsatz des Raststücks auf das Tragstück durch Einrasten das zweite Zahnprofil mit dem vierten Zahnprofil eine formschlüssige Verbindung hinsichtlich einer Drehrichtung um die Längsachse eingeht. Das Elektrobauteil ist an dem Raststück angeordnet oder weist das Raststück, insbesondere vormontiert als integralen Bestandteil, auf. Das erste und dritte Zahnprofil sind zusammen so beschaffen, dass mehrere mögliche Einrastpositionen zwischen dem ersten und dritten Zahlprofil bereitgestellt werden, insbesondere wobei das erste und/oder das dritte Zahnprofil in Längsrichtung mindestens zwei Zähne aufweist.

Das erste, zweite, dritte und vierte Zahnprofil können einen oder mehrere Zähne, Rillen und/oder Raster aufweisen.

In einer Ausführungsform der Aufputz-Elektroinstallation weist das Tragstück durch das Tragstück verlaufendes Loch auf, wobei die Auflagefläche im Loch angeordnet ist und eine Durchgangsöffnung für die Schraube aufweist, und wobei die Schraube durch das Loch zur Auflagefläche geführt wird, und wobei die erste Stirnseite des Tragstücks in einem befestigten Zustand die verputzte oder unverputzte Wand- oder Deckenoberfläche berührt und/oder in Richtung der Wand- oder Deckenoberfläche zeigt.

In einer weiteren Ausführungsform der Aufputz-Elektroinstallation ist das erste Zahnprofil und das dritte Zahnprofil derart als Sägezahnprofil ausgebildet, dass zum Verbinden des Raststücks mit dem Tragstück das Einrasten in Richtung von einer der ersten Stirnseite gegenüberliegenden zweiten Stirnseite hin zur ersten Stirnseite zugelassen wird, und dass in einem sich selbst überlassenen Zustand der Aufputz-Elektroinstallation ein Lösen des Raststücks vom Tragstück in Richtung von der ersten Stirnseite hin zur zweiten Stirnseite verhindert oder zumindest gehemmt ist.

Das Raststück kann somit fest mit dem Tragstück und damit mit der Wand- oder Deckenoberfläche verbunden sein.

In einer weiteren Ausführungsform der Aufputz-Elektroinstallation ist das Tragstück zumindest im Bereich des ersten Zahnprofils zylindrisch, insbesondere ein Hohlzylinder, mit der Längsachse als Zylinderachse.

Das durch das Tragstück verlaufende Loch entspricht in dieser Ausführungsform damit dem Inneren des Hohlzylinders.

In einer weiteren Ausführungsform der Aufputz-Elektroinstallation erstreckt sich das erste Zahnprofil zumindest abschnittsweise, insbesondere durchgängig, über einen Aussenumfang des Tragstücks oder über einen Innenumfang des Tragstücks, und/oder erstreckt sich das zweite Zahnprofil zumindest abschnittsweise, insbesondere durchgängig, über einen Aussenumfang des Tragstücks oder über einen Innenumfang des Tragstücks.

In einer weiteren Ausführungsform der Aufputz-Elektroinstallation weist das zweite Zahnprofil einen nasenförmigen Übergang auf zum selbstzentrierenden Verzahnen des vierten Zahnprofils mit dem zweiten Zahnprofil beim Verbinden des Raststücks mit dem Tragstück.

In einer weiteren Ausführungsform der Aufputz-Elektroinstallation weist das vierte Zahnprofil einen nasenförmigen Übergang auf zum selbstzentrierenden Verzahnen des vierten Zahnprofils mit dem zweiten Zahnprofil beim Verbinden des Raststücks mit dem Tragstück.

Ein nasenförmiger Übergang des zweiten und/oder vierten Zahnprofils führt dazu, dass beim Einschieben des Tragstücks in das Raststück ein zumindest teilweises Aufeinanderliegen des zweiten Zahnprofils und vierten Zahnprofils verhindert wird.

In einer weiteren Ausführungsform der Aufputz-Elektroinstallation weist das Raststück einen Rohranschluss auf zum Verbinden eines Rohres, über welches mindestens ein Stromkabel zur Aufputz-Elektroinstallation herangeführt wird.

Ein solcher Rohranschluss führt zu einem im Vergleich zum Stand der Technik verbesserten mechanischen Schutz für das Stromkabel. Der Rohranschluss ermöglicht eine formschlüssige Verbindung der Aufputz-Elektroinstallation mit dem Rohr. Der Rohranschluss ermöglicht auch eine Vormontage des Rohres.

In einer weiteren Ausführungsform der Aufputz-Elektroinstallation weist das dritte Zahnprofil eine erste Rastnase und eine der ersten Rastnase gegenüberliegende zweite Rastnase auf, wobei mindestens eine der beiden Rastnasen radial in Bezug auf die Längsachse elastisch beweglich ist, wobei in einem Lösezustand der Aufputz-Elektroinstallation, insbesondere unter Zuhilfenahme eines Lösewerkzeugs, ein Lösen des Raststücks vom Tragstück in Richtung von der ersten Stirnseite hin zur zweiten Stirnseite möglich wird, wobei das Lösen die elastische Beweglichkeit mindestens einer der beiden Rastnasen ausnützt.

Die Aufputz-Elektroinstallation kann so beschaffen sein, dass ein Lösen des Raststücks vom Tragstück nur mithilfe eines Lösewerkzeugs möglich ist. Dies kann insbesondere zur elektrischen Sicherheit beitragen.

In einer weiteren Ausführungsform der Aufputz-Elektroinstallation sind die Zähne der ersten Rastnase gegenüber den Zähnen der zweiten Rastnase in Bezug auf eine Richtung parallel zur Längsachse versetzt.

Versetzte Zähne können insbesondere zu präziser einstellbaren Rastpositionen in Längsrichtung führen.

In einer weiteren Ausführungsform der Aufputz-Elektroinstallation weist das Raststück zum Anliegen an der Wand- oder Deckenoberfläche mindestens einen Arm auf, der sich in Bezug auf die Längsachse radial erstreckt.

Die vorliegende Erfindung betrifft ferner ein Aufputz-Befestigungssystem zur Befestigung mindestens eines Elektrobauteils ausgebildet als Schalter, Steckdose, Feuermelder, Bewegungsmelder oder Lampe an einer verputzten oder unverputzten Wand- oder Deckenoberfläche mittels einer Schraube, aufweisend ein Tragstück und ein Raststück zum Verbinden mit dem Tragstück. Das Tragstück weist auf 1) eine Auflagefläche zum Aufliegen eines Schraubenkopfes der Schraube, wobei die Auflagefläche im Tragstück angeordnet ist und in eine im Vergleich zu einer ersten Stirnseite des Tragstücks entgegengesetzte Richtung orientiert ist, 2) ein parallel zu einer Längsachse des Tragstücks verlaufendes erstes Zahnprofil, und 3) ein senkrecht zur Längsachse verlaufendes zweites Zahnprofil, welches insbesondere umfänglich um die Auflagefläche verläuft. Das Raststück weist auf 1) ein drittes Zahnprofil, als komplementär zum ersten Zahnprofil, ausgebildet, sodass bei Aufsatz des Raststücks auf das Tragstück durch Einrasten das erste Zahnprofil mit dem dritten Zahnprofil eine formschlüssige Verbindung hinsichtlich einer Richtung parallel zur Längsachse eingeht, und 2) ein viertes Zahnprofil, als komplementär zum zweiten Zahnprofil, ausgebildet, sodass bei Aufsatz des Raststücks auf das Tragstücks durch Einrasten das zweite Zahnprofil mit dem vierten Zahnprofil eine formschlüssige Verbindung hinsichtlich einer Drehrichtung um die Längsachse eingeht. Das Raststück ist zum Anordnen des Elektrobauteils am Raststück ausgebildet. Das erste und dritte Zahnprofil sind zusammen so beschaffen, dass mehrere mögliche Einrastpositionen zwischen dem ersten und dritten Zahlprofil bereitgestellt werden, insbesondere wobei das erste und/oder das dritte Zahnprofil in Längsrichtung mindestens zwei Zähne aufweist.

In einer Ausführungsform des Aufputz-Befestigungssystems weist das Aufputz-Befestigungssystem einen Befestigungsbügel zur Aufnahme des mindestens einen Elektrobauteils auf, wobei der Befestigungsbügel mit dem Raststück ein integrales Bauteil bildet.

Die Erfindung betrifft ferner eine Steckdose mit einem erfindungsgemässen Aufputz-Befestigungssystem, wobei zumindest ein Teil der Steckdose mit dem Raststück ein integrales Bauteil bildet.

Die Erfindung betrifft auch eine Lampe mit einem erfindungsgemässen Aufputz-Befestigungssystem, wobei zumindest ein Teil der Lampe mit dem Raststück ein integrales Bauteil bildet.

Das Aufputz-Befestigungssystem kann auch mit einem Feuermelder oder Bewegungsmelder verknüpft sein. Zumindest ein Teil des Feuermelders oder Bewegungsmelders kann mit dem Raststück ein integrales Bauteil bilden.

### KURZE BESCHREIBUNG DER ZEICHNUNGEN

Weitere Vorteile der vorliegenden Erfindung sind aus der detaillierten Beschreibung und den Zeichnungen ersichtlich.
Figur 1 zeigt eine erste schematische Darstellung einer Aufputz-Elektroinstallation nach dem Stand der Technik;
Figur 2 zeigt eine zweite schematische Darstellung einer Aufputz-Elektroinstallation nach dem Stand der Technik;
Figur 3 zeigt eine dritte schematische Darstellung einer Aufputz-Elektroinstallation nach dem Stand der Technik;
Figur 4 zeigt eine schematische Darstellung eines erfindungsgemässen Tragstücks;
Figur 5 zeigt eine schematische Darstellung eines erfindungsgemässen Tragstücks in einer frontalen Ansicht;
Figur 6 zeigt eine schematische Teilansicht eines erfindungsgemässen Raststücks;
Figur 7 zeigt eine schematische Darstellung eines erfindungsgemässen Raststücks;
Figur 8 eine schematische Darstellung aufweisend eine Steckdose, ein Raststück, einen dahinterliegenden Befestigungsbügel sowie ein Tragstück in einer Explosionsdarstellung;
Figur 9 und 10 zeigen eine schematische Darstellung eines erfindungsgemässen Aufputz-Befestigungssystem in unterschiedlichen Ansichten;
Figur 11 zeigt eine schematische Darstellung einer Steckdose, die ein erfindungsgemässes Raststück als integralen Bestandteil aufweist;
Figur 12 zeigt eine schematische Darstellung einer Steckdose, die mit Hilfe eines erfindungsgemässen Aufputz-Befestigungssystems an einer Wand befestigt werden kann; und
Figur 13 und 14 zeigen schematische Darstellungen aus unterschiedlichen Perspektiven einer Lampe, die mit Hilfe eines erfindungsgemässen Aufputz-Befestigungssystems an einer Wand befestigt werden kann.

### DETAILLIERTE BESCHREIBUNG DER ZEICHNUNGEN

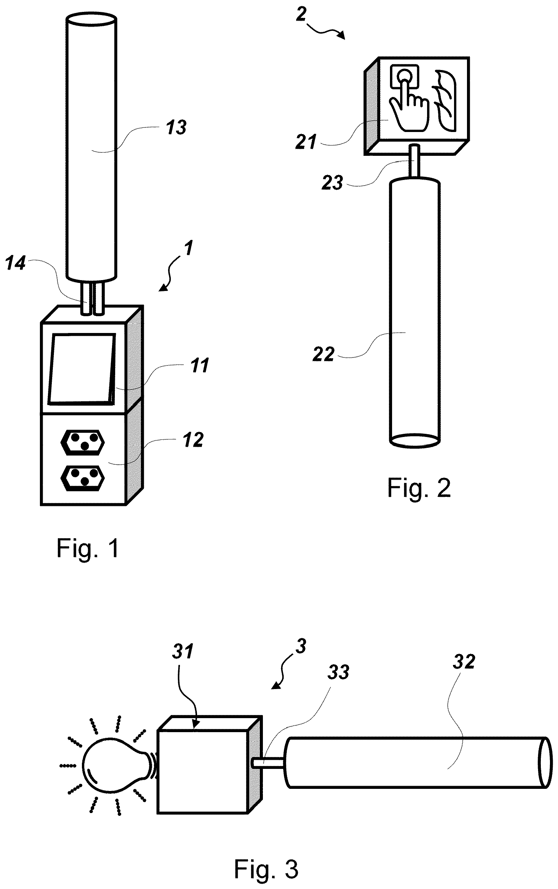

Figur 1 zeigt eine schematische Darstellung einer Aufputz-Elektroinstallation 1 nach dem Stand der Technik. Die Aufputz-Elektroinstallation 1 ist zur Befestigung auf einer verputzten oder unverputzten Wandoberfläche ausgelegt. Die Aufputz-Elektroinstallation 1 gemäss Figur 1 weist eine Steckdose 1 sowie einen Schalter 11 auf. Die Steckdose 12 und der Schalter sind elektrisch mit der Umwelt über Stromkabel 14 verbunden, die grösstenteils in einem die Stromkabel 14 schützenden Rohr 13 verlegt sind und an der verputzten oder unverputzten Wandoberfläche im Rohr 13 verlaufen. Ein kurzer Abschnitt zwischen Schalter 11 und Rohr 13, oder - falls kein Schalter 11 vorhanden ist oder der Schalter 11 unter der Steckdose 12 angeordnet ist - zwischen Steckdose 12 und Rohr 13, ist in Ausführungen einer Aufputz-Elektroinstallation 1 nach dem Stand der Technik üblicherweise nicht durch ein Rohr 13 geschützt.

Figur 2 zeigt eine schematische Darstellung einer Aufputz-Elektroinstallation 2 nach dem Stand der Technik. Die Aufputz-Elektroinstallation 2 ist zur Befestigung auf einer verputzten oder unverputzten Wandoberfläche ausgelegt. Die Aufputz-Elektroinstallation 2 gemäss Figur 2 weist einen Feuermelder 21 auf. Über ein Stromkabel 23, über welches Strom bzw. elektrische Signale geführt werden können, ist der Feuermelder mit der Umwelt verbunden. Das Stromkabel 22 ist wie in Figur 1 durch ein Rohr 22 geschützt, wobei der Schutz durch das Rohr 22 in Ausführungen gemäss dem Stand der Technik nicht vollständig bis zum Feuermelder 21 reicht.

Figur 3 zeigt eine schematische Darstellung einer Aufputz-Elektroinstallation 3 nach dem Stand der Technik. Die Aufputz-Elektroinstallation 3 ist zur Befestigung auf einer verputzten oder unverputzten Wandoberfläche ausgelegt. Die Aufputz-Elektroinstallation 3 weist eine Lampe 31 auf, welche über ein Stromkabel 33 mit Strom versorgt wird. Das Stromkabel 33 ist in Ausführungen gemäss dem Stand der Technik durch ein Rohr 32 geschützt, wobei der Schutz durch das Rohr 32 nicht vollständig bis zur Lampe 31 reicht.

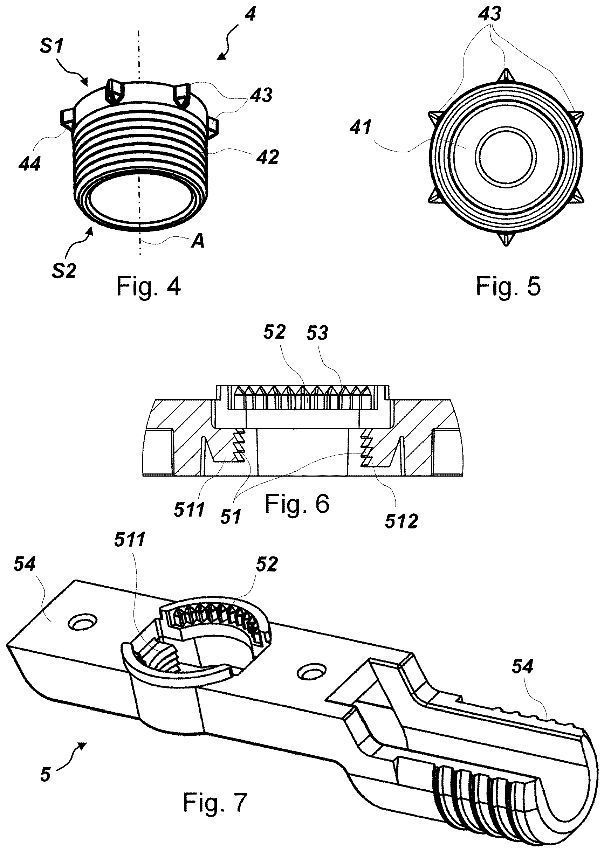

Figur 4 zeigt ein erfindungsgemässes Tragstück 4. Das Tragstück 4 ist dazu ausgelegt, an einer verputzten oder unverputzten Wand- oder Deckenoberfläche befestigt zu werden, wobei das Tragstück 4 in einem befestigten Zustand die Wandoberfläche mit einer ersten Stirnseite S1 berührt. Das in Figur 4 gezeigte Tragstück 4 ist zylinderförmig, wobei ein durch das Tragstück 4 verlaufendes Loch von der ersten Stirnseite S1 zu einer der ersten Stirnseite S1 gegenüberliegenden zweiten Stirnseite S2 verläuft (bzw. natürlich auch von S2 zu S1). Das in Figur 4 gezeigte Tragstück 4 entspricht daher topologisch einem Hohlzylinder mit einem entlang der Längsachse A des Tragstücks 4 verlaufenden Loch. Das in Figur 4 gezeigte Tragstück 4 ist demnach toroidal, d.h. es entspricht einem topologischen Torus. Innerhalb des im Tragstück sich befindenden Lochs befindet sich eine Auflagefläche, welche in Figur 4 nicht gezeigt ist. Die Auflagefläche weist eine Durchgangsöffnung auf, durch welche eine Schraube geführt werden kann. Vorzugsweise ist die Durchgangsöffnung in der Auflagefläche an der Stelle angeordnet, an der die Längsachse A des Tragstücks eine Ebene schneidet, in der die Auflagefläche liegt. Die Durchgangsöffnung in der Auflagefläche kann grössentechnisch an die Schraube angepasst werden, die durch die Durchgangsöffnung in der Auflagefläche geführt werden kann.

In einem in die Wand gebohrten Loch kann beispielsweise ein Dübel angebracht sein. Um das Tragstück 4 an der Wand zu befestigen, kann eine Schraube, von der zweiten Stirnseite S2 her kommend, durch die Durchgangsöffnung zur ersten Stirnseite S1 hin in den Dübel geführt werden. In einem befestigten Zustand liegt der Schraubenkopf dann auf der Auflagefläche auf, und das Schraubengewinde ist im Dübel. Im befestigten Zustand liegt die erste Stirnseite S1 an der Wandoberfläche an.

Anstelle den Dübel separat, d.h. zuerst, in der Bohrung zu befestigen und dann das Tragstück 4 mit einer Schraube mit Hilfe des eingebrachten Dübels zu befestigen, kann der Dübel auch ein integraler Bestandteil des Tragstücks 4 sein. In diesem Fall werden Dübel und Tragstück 4 gemeinsam in bzw. an der Wandoberfläche angebracht.

Das Tragstück 4 weist ein erstes Zahnprofil 42 und ein zweites Zahnprofil 43 auf. Das erste Zahnprofil 42 erstreckt sich parallel zur Längsachse A des Tragstücks 4. Das erste Zahnprofil 42 ist insbesondere rasterförmig, d.h. als Raster ausgebildet. Das erste Zahnprofil 42 kann z.B. durch äquidistante Rillen bereitgestellt werden, die z.B. als Vertiefungen in der äusseren Oberfläche des Tragstücks 4 ausgebildet sein können, oder durch äquidistante Zähne, die z.B. vollumfänglich das Tragstück 4 umrunden. Das erste Zahnprofil 42 kann einen oder mehrere Zähne aufweisen (bzw. eine oder mehrere Rillen). Das zweite Zahnprofil 43 verläuft senkrecht zur Längsachse A. In Figur 4 ist es an der ersten Stirnseite S1 des Tragstücks 4 angeordnet, wobei es auch zwischen der ersten Stirnseite S1 und der zweiten Stirnseite S2 angeordnet sein kann. Das zweite Zahnprofil 43 weist einen oder mehrere Zähne auf, welche wiederum einen nasenförmigen Übergang 44 aufweisen. Der nasenförmige Übergang 44 erleichtert eine Verbindung von Tragstück 4 und Raststück (nicht in Figur 4 gezeigt), so dass das zum zweiten Zahnprofil komplementäre vierte Zahnprofil des Raststücks (nicht in Figur 4 gezeigt) leichter zu einer formschlüssigen Verbindung von Tragstück 4 und Raststück beiträgt.

Figur 5 zeigt ein erfindungsgemässes Tragstück 4 in einer frontalen Ansicht, d.h. frontal von der zweiten Stirnseite S2 in Richtung der ersten Stirnseite S1 schauend. Die Auflagefläche 41 mit der zentralen Durchgangsöffnung, durch welche eine Schraube geführt wird, sowie das zweite Zahnprofil 43 sind gut sichtbar.

Figur 6 zeigt eine schematische Teilansicht eines erfindungsgemässen Raststücks 5, welches dazu ausgebildet ist, formschlüssig mit einem erfindungsgemässen Tragstück, welches wie in Figur 4 und 5 dargestellt ausgebildet ist, verbunden zu werden. Das Raststück 5 weist ein drittes Zahnprofil 51 sowie ein viertes Zahnprofil 52 auf. Das dritte Zahnprofil 51 ist komplementär zum in Figur 4 dargestellten ersten Zahnprofil 42 des Tragstücks, so dass eine Interaktion zwischen dem ersten Zahnprofil 42 des Tragstücks und dem dritten Zahnprofil 51 eine formschlüssige Verbindung zwischen Tragstück und Raststück in Richtung der Längsachse A vermittelt. Insbesondere können eine oder mehrere mögliche Einrastpositionen durch eine Interaktion zwischen dem ersten Zahnprofil 42 und dem dritten Zahnprofil 51 bereitgestellt werden. Das dritte Zahnprofil 51 kann einen oder mehrere Zähne aufweisen (dies müssen wie beim ersten Zahnprofil bereits erwähnt keine Zähne im eigentlichen Sinn sein - wichtig ist primär, dass eine Interaktion zwischen dem ersten Zahnprofil 42 und dem dritten Zahnprofil 51 zu einer formschlüssigen Verbindung zwischen Tragstück 4 und Raststück 5 beiträgt; falls das erste Zahnprofil 42 einen Zahn aufweist, weist das dritte Zahnprofil 51 mehrere Zähne auf; falls das erste Zahnprofil 42 mehrere Zähne aufweist, kann das dritte Zahnprofil 51 einen oder mehrere Zähne aufweisen).

Unterschiedliche mögliche Einrastpositionen erlauben - insofern das Tragstück 4 an einer Wand befestigt ist - unterschiedliche Abstände des Raststücks 5 von der Wand. Insbesondere bei Unebenheiten der Wand oder einer Schieflage der Wand kann es notwendig sein, das Raststück, bzw. das Elektrobauteil, welches an dem Raststück 5 angeordnet ist und/oder welches das Raststück als vormontiertes integrales Element aufweist, in einem gewissen Abstand zur Wand fest einrasten zu lassen.

Das in Figur 6 gezeigte Raststück hat eine erste Rastnase 511 und eine zweite Rastnase 512, wobei die Zähne der ersten und zweiten Rastnase 511,512 in Längsrichtung A zueinander versetzt sind. Mindestens eine der zwei Rastnasen 511, 512 kann radial in Bezug auf die Längsachse A elastisch beweglich sein. Eine vom ersten und dritten Zahnprofil vermittelte formschlüssige Verbindung in Längsrichtung A kann unter Zuhilfenahme eines geeigneten Werkzeugs, die elastische Beweglichkeit ausnützend, gelöst werden. Ohne Zuhilfenahme eines solches Lösewerkzeugs ist ein Lösen des Raststücks vom Tragstück in Längsrichtung A verhindert oder zumindest gehemmt. In Längsrichtung A versetzte Rastnasen 511,512 können dazu verwendet werden, das Raststück 5 schief - bezogen auf die Längsrichtung A des Tragstücks 4 - einrasten zu lassen. Damit kann das Raststück z.B. parallel zu einer schiefen Wand ausgerichtet werden, oder aber ein schiefes Befestigen des Tragstücks 4 an einer Wand kann zumindest teilweise kompensiert werden. In Längsrichtung versetzte Nasen können auch ein feineres Raster ermöglichen. Bei einem Abstand der Zähne einer Rastnase untereinander von einem Millimeter haben die zugehörigen Rastpositionen auch einen Abstand von einem Millimeter. Sind die Zähne einer zweiten Rastnase in Längsrichtung um einen halben Millimeter zu den Zähnen der ersten Rastnase versetzt, kann sich insgesamt ein Raster ergeben, bei dem die Abstände zwischen Rastpositionen einen halben Millimeter betragen.

Das vierte Zahnprofil 52 des Raststücks 5 ist komplementär zum zweiten Zahnprofil 43 des Tragstücks 4. Das in Figur 6 dargestellte vierte Zahnprofil 52 weist Zähne auf, die einen nasenförmigen Übergang besitzen (entsprechend den Zähnen des in Figur 4 gezeigten zweiten Zahnprofils 43). Die nasenförmigen Übergänge 44,53 des zweiten und vierten Zahnprofils vereinfachen ein Befestigen des Raststücks am Tragstück. Auch das vierte Zahnprofil 52 kann einen oder mehrere Zähne aufweisen, wobei ein Zahn im zweiten oder vierten Zahnprofil mehrere Zähne im anderen Zahnprofil bedingt (so wie im Fall des ersten und dritten Zahnprofils).

Eine Interaktion zwischen dem zweiten Zahnprofil 43 und dem vierten Zahnprofil 52 ermöglicht eine formschlüssige Verbindung von Tragstück 4 und Raststück 5 hinsichtlich einer Drehrichtung um die Längsachse A. Das zweite und vierte Zahnprofil können so konfiguriert sein, dass mehrere mögliche Einrastpositionen bereitgestellt werden, welche möglichen Rotationseinrastpositionen entsprechen. Somit kann das Raststück in unterschiedlichen Orientierungen mit dem Tragstück formschlüssig verbunden werden.

Figur 7 zeigt eine schematische Ansicht eines erfindungsgemässen Raststücks 5. Das vierte Zahnprofil 52 und die erste Rastnase 511 sind gut sichtbar. Das erste und dritte Zahnprofil können z.B. als Sägezahnprofile ausgebildet sein. Das Raststück 5 kann nun wie folgt formschlüssig mit dem Tragstück 4 verbunden werden: Beginnend mit der zweiten Stirnseite S2 kann das Tragstück am vierten Zahnprofil 52 vorbei in die im Raststück 5 sichtbare Öffnung geschoben werden, wobei das Hineinschieben nach Einrast-Interaktion zwischen dem ersten und dritten Zahnprofil 42,51 abgebrochen wird.

Das Raststück 5 weist einen Arm 54 bzw. einen Rohranschluss 54 auf. Der Arm 54 ist zum Anliegen an die Wand- oder Deckenoberfläche ausgebildet. Der Rohranschluss wiederum kann dazu benutzt werden, um Stromkabel zu einem am Raststück 5 angeordneten oder das Raststück 5 integral aufweisenden Elektrobauteil zu führen. Ein Vorteil der strukturellen Verknüpfung von Raststück und Rohranschluss ist, dass ein Stromkabel immer von einem Rohr bzw. Rohranschluss geschützt ist (im Gegensatz zum in den Figuren 1, 2 und 3 gezeigten Stand der Technik). Ein Rohr kann im strukturierten Bereich des Rohranschlusses 54 stabil mit dem Rohranschluss verbunden werden.

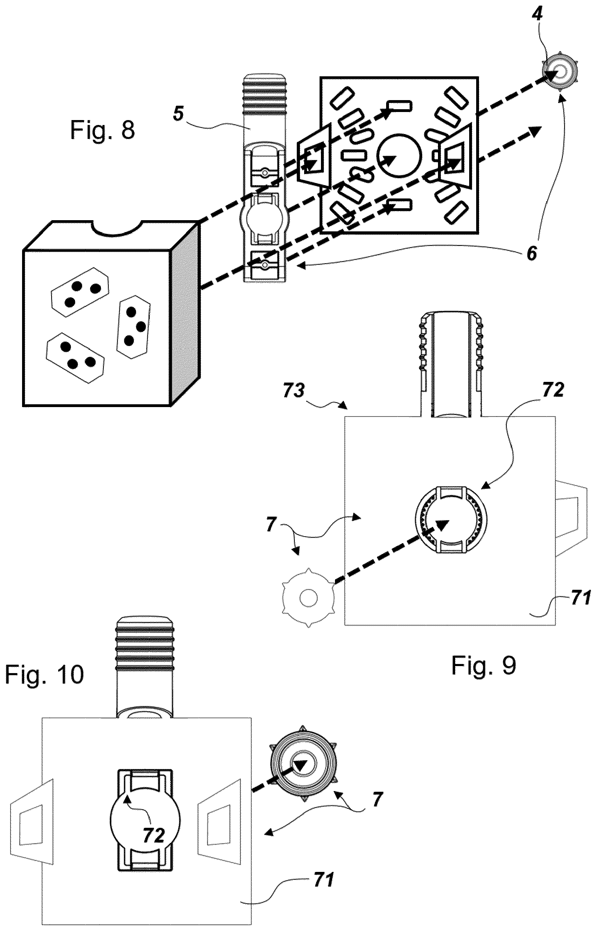

Figur 8 zeigt eine schematische Ansicht aufweisend eine Steckdose, ein Raststück 5, einen dahinterliegenden Befestigungsbügel sowie ein Tragstück in einer Explosionsdarstellung. Das Raststück kann mit dem Befestigungsbügel verbunden werden, an welchem wiederum die Steckdose befestigt wird. Das Tragstück kann durch eine Öffnung im Befestigungsbügel mit dem am Befestigungsbügel befestigten Raststück verbunden werden. Raststück 5 und Tragstück 4 bilden zusammen ein Aufputz-Befestigungssystem 6. Der in Figur 8 gezeigte Befestigungsbügel ist ein Befestigungsbügel nach dem Stand der Technik.

Figur 9 und 10 zeigen ein Aufputz-Befestigungssystem 7 in unterschiedlichen Ansichten. Das Raststück 72 ist dabei ein Teil eines integralen Bauteils 73 aufweisend einen Befestigungsbügel 71 und das Raststück 72. In Figur 9 ist das Tragstück im Vordergrund, und in Figur 10 im Hintergrund.

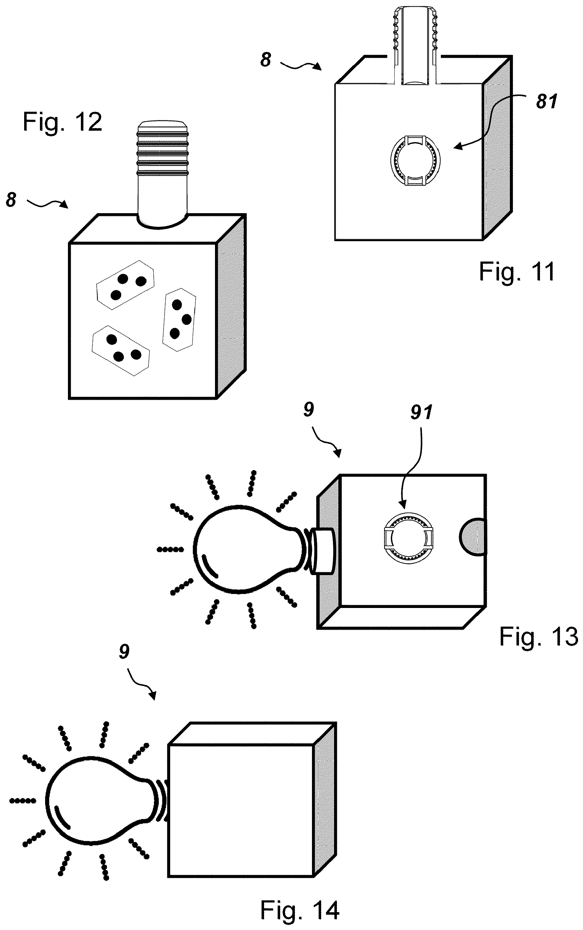

Figur 11 zeigt eine Steckdose 8. Das Raststück 81 ist dabei integraler Bestandteil der Steckdose 8.

Figur 12 zeigt eine Steckdose 8, die mit Hilfe eines erfindungsgemässen Aufputz-Befestigungssystem an einer verputzten oder unverputzten Wand- oder Deckenoberfläche befestigt werden kann. Figur 13 und 14 zeigen eine Lampe 9, die mit einem erfindungsgemässen Aufputz-Befestigungssystem an einer verputzten oder unverputzten Wand- oder Deckenoberfläche befestigt werden kann. Figur 13 zeigt dabei eine Aufsicht auf die Seite der Lampe 9, welche nach Befestigung an der Wand der Wand gegenüberliegend ist. Mittig dargestellt ist dabei das zur Befestigung verwendete Raststück 91. Figur 14 wiederum zeigt eine Aufsicht auf eine Seite der Lampe 9, welche nach Befestigung an der Wand nicht der Wand gegenüberliegend ist.

Die Erfindung wurde zwar anhand ihrer bevorzugten Ausführungsform(en) erläutert, doch es können viele weitere Änderungen und Variationen vorgenommen werden, ohne über den Umfang der vorliegenden Erfindung hinauszugehen. Daher ist es vorgesehen, dass die beiliegenden Patentansprüche Änderungen und Variationen abdecken, die im tatsächlichen Umfang der Erfindung enthalten sind.

## Patentansprüche

1. Aufputz-Elektroinstallation (1, 2, 3) aufweisend ein Tragstück (4) zur Befestigung an einer verputzten oder unverputzten Wand- oder Deckenoberfläche mittels einer Schraube, ein Raststück (5) zum Verbinden mit dem Tragstück und mindestens ein Elektrobauteil ausgebildet als Schalter (11), Steckdose (12), Feuermelder (21), Bewegungsmelder oder Lampe (31),
wobei das Tragstück aufweist:
eine Auflagefläche (41) zum Aufliegen eines Schraubenkopfes der Schraube, wobei die Auflagefläche im Tragstück angeordnet ist und in eine im Vergleich zu einer ersten Stirnseite (S1) des Tragstücks entgegengesetzte Richtung orientiert ist,
ein parallel zu einer Längsachse (A) des Tragstücks verlaufendes erstes Zahnprofil (42),
ein senkrecht zur Längsachse verlaufendes zweites Zahnprofil (43), welches insbesondere umfänglich um die Auflagefläche verläuft,
wobei das Raststück aufweist:
ein drittes Zahnprofil (51), als komplementär zum ersten Zahnprofil, ausgebildet, sodass bei Aufsatz des Raststücks auf das Tragstück durch Einrasten das erste Zahnprofil mit dem dritten Zahnprofil eine formschlüssige Verbindung hinsichtlich einer Richtung parallel zur Längsachse eingeht,
ein viertes Zahnprofil (52), als komplementär zum zweiten Zahnprofil, ausgebildet, sodass bei Aufsatz des Raststücks auf das Tragstück durch Einrasten das zweite Zahnprofil mit dem vierten Zahnprofil eine formschlüssige Verbindung hinsichtlich einer Drehrichtung um die Längsachse eingeht, und
wobei das Elektrobauteil an dem Raststück angeordnet ist oder das Raststück, insbesondere vormontiert als integralen Bestandteil, aufweist, und wobei das erste und dritte Zahnprofil zusammen so beschaffen sind, dass mehrere mögliche Einrastpositionen zwischen dem ersten und dritten Zahlprofil bereitgestellt werden, insbesondere wobei das erste und/oder das dritte Zahnprofil in Längsrichtung mindestens zwei Zähne aufweist.

2. Aufputz-Elektroinstallation (1, 2, 3) gemäss Anspruch 1, wobei das Tragstück ein durch das Tragstück verlaufendes Loch aufweist, wobei die Auflagefläche im Loch angeordnet ist und eine Durchgangsöffnung für die Schraube aufweist, und wobei die Schraube durch das Loch zur Auflagefläche geführt wird, und wobei die erste Stirnseite (S1) des Tragstücks in einem befestigten Zustand die verputzte oder unverputzte Wand- oder Deckenoberfläche berührt und/oder in Richtung der Wand- oder Deckenoberfläche zeigt.

3. Aufputz-Elektroinstallation (1, 2, 3) gemäss einem der vorherigen Ansprüche, wobei das erste Zahnprofil (42) und das dritte Zahnprofil (51) derart als Sägezahnprofil ausgebildet sind, dass zum Verbinden des Raststücks (5) mit dem Tragstück (4) das Einrasten in Richtung von einer der ersten Stirnseite (S1) gegenüberliegenden zweiten Stirnseite (S2) hin zur ersten Stirnseite zugelassen wird, und dass in einem sich selbst überlassenen Zustand der Aufputz-Elektroinstallation ein Lösen des Raststücks vom Tragstück in Richtung von der ersten Stirnseite hin zur zweiten Stirnseite verhindert oder zumindest gehemmt ist.

4. Aufputz-Elektroinstallation (1, 2, 3) gemäss einem der vorherigen Ansprüche, wobei das Tragstück (4) zumindest im Bereich des ersten Zahnprofils (42) zylindrisch ist, insbesondere ein Hohlzylinder, mit der Längsachse (A) als Zylinderachse.

5. Aufputz-Elektroinstallation (1, 2, 3) gemäss einem der vorherigen Ansprüche, wobei sich das erste Zahnprofil (42) zumindest abschnittsweise, insbesondere durchgängig, über einen Aussenumfang des Tragstücks (4) oder über einen Innenumfang des Tragstücks erstreckt, und/oder wobei sich das zweite Zahnprofil (43) zumindest abschnittsweise, insbesondere durchgängig, über einen Aussenumfang des Tragstücks (4) oder über einen Innenumfang des Tragstücks erstreckt.

6. Aufputz-Elektroinstallation (1, 2, 3) gemäss einem der vorherigen Ansprüche, wobei das zweite Zahnprofil (43) einen nasenförmigen Übergang (44) aufweist zum selbstzentrierenden Verzahnen des vierten Zahnprofils (52) mit dem zweiten Zahnprofil beim Verbinden des Raststücks mit dem Tragstück.

7. Aufputz-Elektroinstallation (1, 2, 3) gemäss einem der vorherigen Ansprüche, wobei das vierte Zahnprofil (52) einen nasenförmigen Übergang (53) aufweist zum selbstzentrierenden Verzahnen des vierten Zahnprofils (52) mit dem zweiten Zahnprofil beim Verbinden des Raststücks mit dem Tragstück.

8. Aufputz-Elektroinstallation (1, 2, 3) gemäss einem der vorherigen Ansprüche, wobei das Raststück (5) einen Rohranschluss (54) aufweist zum Verbinden eines Rohres (13, 22, 32), über welches mindestens ein Stromkabel (14, 23, 33) zur Aufputz-Elektroinstallation herangeführt wird.

9. Aufputz-Elektroinstallation (1, 2, 3) gemäss einem der vorherigen Ansprüche, wobei das dritte Zahnprofil (51) eine erste Rastnase (511) und eine der ersten Rastnase gegenüberliegende zweite Rastnase (512) aufweist, wobei mindestens eine der beiden Rastnasen radial in Bezug auf die Längsachse (A) elastisch beweglich ist, wobei in einem Lösezustand der Aufputz-Elektroinstallation, insbesondere unter Zuhilfenahme eines Lösewerkzeugs, ein Lösen des Raststücks vom Tragstück in Richtung von der ersten Stirnseite hin zur zweiten Stirnseite möglich wird, wobei das Lösen die elastische Beweglichkeit mindestens einer der beiden Rastnasen ausnützt.

10. Aufputz-Elektroinstallation (1, 2, 3) gemäss Anspruch 9, wobei die Zähne der ersten Rastnase (511) gegenüber den Zähnen der zweiten Rastnase (512) in Bezug auf eine Richtung parallel zur Längsachse (A) versetzt sind.

11. Aufputz-Elektroinstallation (1, 2, 3) gemäss einem der vorherigen Ansprüche, wobei das Raststück (5) zum Anliegen an der Wand- oder Deckenoberfläche mindestens einen Arm (54) aufweist, der sich in Bezug auf die Längsachse (A) radial erstreckt.

12. Aufputz-Befestigungssystem (6,7) zur Befestigung mindestens eines Elektrobauteils ausgebildet als Schalter (11), Steckdose (12), Feuermelder (21), Bewegungsmelder oder Lampe (31) an einer verputzten oder unverputzten Wand- oder Deckenoberfläche mittels einer Schraube, aufweisend ein Tragstück (4) und ein Raststück (5,72) zum Verbinden mit dem Tragstück,
wobei das Tragstück aufweist:
eine Auflagefläche (41) zum Aufliegen eines Schraubenkopfes der Schraube, wobei die Auflagefläche im Tragstück angeordnet ist und in eine im Vergleich zu einer ersten Stirnseite (S1) des Tragstücks entgegengesetzte Richtung orientiert ist,
ein parallel zu einer Längsachse (A) des Tragstücks verlaufendes erstes Zahnprofil (42),
ein senkrecht zur Längsachse verlaufendes zweites Zahnprofil (43), welches insbesondere umfänglich um die Auflagefläche verläuft,
wobei das Raststück aufweist:
ein drittes Zahnprofil (51), als komplementär zum ersten Zahnprofil, ausgebildet, sodass bei Aufsatz des Raststücks auf das Tragstück durch Einrasten das erste Zahnprofil mit dem dritten Zahnprofil eine formschlüssige Verbindung hinsichtlich einer Richtung parallel zur Längsachse eingeht,
ein viertes Zahnprofil (52), als komplementär zum zweiten Zahnprofil, ausgebildet, sodass bei Aufsatz des Raststücks auf das Tragstücks durch Einrasten das zweite Zahnprofil mit dem vierten Zahnprofil eine formschlüssige Verbindung hinsichtlich einer Drehrichtung um die Längsachse eingeht, und
wobei das Raststück zum Anordnen des Elektrobauteils am Raststück ausgebildet ist, und wobei das erste und dritte Zahnprofil zusammen so beschaffen sind, dass mehrere mögliche Einrastpositionen zwischen dem ersten und dritten Zahlprofil bereitgestellt werden, insbesondere wobei das erste und/oder das dritte Zahnprofil in Längsrichtung mindestens zwei Zähne aufweist.

13. Aufputz-Befestigungssystem (7) gemäss Anspruch 12, aufweisend einen Befestigungsbügel (71) zur Aufnahme des mindestens einen Elektrobauteils, wobei der Befestigungsbügel mit dem Raststück (72) ein integrales Bauteil (73) bildet.

14. Steckdose (8) mit einem Aufputz-Befestigungssystem gemäss Anspruch 12 oder 13, wobei zumindest ein Teil der Steckdose mit dem Raststück (81) ein integrales Bauteil bildet.

15. Lampe (9) mit einem Aufputz-Befestigungssystem gemäss Anspruch 12 oder 13, wobei zumindest ein Teil der Lampe mit dem Raststück (91) ein integrales Bauteil bildet.
